# EUROPEAN PATENT APPLICATION

(11) **EP 4 328 083 A1**
(43) Date of publication of application: **28.02.2024**
(21) Application number: 22848140.4
(22) Date of filing: 24.06.2022
(51) Int. Cl.: B60N 2/28

(54) **SUPPORTING LEG STRUCTURE AND CHILD SAFETY SEAT**

(30) Priority: 30.07.2021 CN 202110873806
(71) Applicant: Ningbo Baby First Baby Products Co., Ltd., Yuyao, Zhejiang 315412 (CN)
(72) Inventor: ZHOU, Xiaolin, Ningbo, Zhejiang 315412 (CN); YANG, Gang, Ningbo, Zhejiang 315412 (CN)
(74) Representative: Thoma, Michael
(86) International application number: PCT/CN2022/101079
(87) International publication number: WO 2023/005533

(57) **Abstract**

Disclosed are a support leg structure and a child safety seat including the same. The support leg structure includes an inner tube (1) and an outer tube (2) vertically slidably connected to each other. A bottom of the inner tube (1) is configured to abut against a chassis of a vehicle. An adjustment plug (3) is mounted between the inner tube (1) and the outer tube (2). The adjustment plug (3) includes a body (31) and a connecting portion (32) arranged above the body (31). The connecting portion (32) is fixedly connected to the outer tube (2). The body (31) is movably connected to the connecting portion (32). The body (31) is further movably connected to a gear assembly (4) configured to lock the outer tube (2) with the inner tube (1) or disengage the outer tube (2) from the inner tube (1). A state indication portion (311) is arranged on a side wall of the body (31). The inner tube (1) pushes the body (31) to move upward to show a first indication window (3111) when the outer tube (2) is locked with the inner tube (1) and a support leg is in a stressed supporting state. The body (31) moves downward under gravity to show a second indication window (3112) when the support leg is in a non-supporting state. The support leg structure can reliably and effectively indicate whether the support leg is mounted in place, and involves a simple overall structure.

## Description

### TECHNICAL FIELD

The present disclosure relates to the technical field of child safety seats, and particularly to a support leg structure and a child safety seat including the same.

### BACKGROUND

With the improvement of people's awareness of driving safety, child safety seats have become a must-have for infants and children in vehicles. To prevent the child safety seat from moving due to inertia in a case such as sudden braking, a support leg is generally arranged at the front end of the base of the child safety seat, to support and fix the position of the child safety seat. In the prior art, to ensure that the support leg is in contact with a chassis of a vehicle and mounted in place, a corresponding color change prompt mechanism is generally arranged on the support leg to remind the user. However, most of the existing color change prompt mechanisms require the use of a spring to realize color change through an elastic spring force of the spring, which involves a large number of parts, a complex structure, and cumbersome assembly operations.

### SUMMARY

To solve at least one of the above problems, the prevent disclosure first provides a support leg structure, including an inner tube and an outer tube vertically slidably connected to each other, where a bottom of the inner tube is configured to abut against a chassis of a vehicle, an adjustment plug is mounted between the inner tube and the outer tube, the adjustment plug includes a body and a connecting portion arranged above the body, the connecting portion is fixedly connected to the outer tube, and the body is movably connected to the connecting portion to realize a vertical movement of the body relative to the connecting portion when the body is stressed; and the body is further movably connected to a gear assembly configured to lock the outer tube with the inner tube or disengage the outer tube from the inner tube, a state indication portion is arranged on a side wall of the body, the state indication portion includes a first indication window configured to indicate that a support leg is in a stressed supporting state and a second indication window configured to indicate that the support leg is in a non-supporting state, the inner tube pushes the body to move upward to show the first indication window when the outer tube is locked with the inner tube and the support leg is in the stressed supporting state, and the body moves downward under gravity to show the second indication window when the support leg is in the non-supporting state.

Optionally, the outer tube is provided with an indication window corresponding to the state indication portion, and one of the first indication window and the second indication window is shown through the indication window.

Optionally, the state indication portion is provided with a limiting buckle configured to engage with the indication window.

Optionally, the adjustment plug further includes a first elastic member, an upper end and a lower end of the first elastic member are respectively connected to the connecting portion and the body, and the body is movably connected to the connecting portion through the first elastic member.

Optionally, the support leg structure further includes a protective member connected to the connecting portion, where the protective member is provided with a positioning block, the outer tube is provided with a second positioning hole configured to engage with the positioning block, and the connecting portion is fixedly connected to the outer tube through an engagement of the positioning block with the second positioning hole.

Optionally, the gear assembly includes a gear member, the gear member includes an engagement end, the body is provided with a through hole for the engagement end to pass through, the outer tube is provided with a first positioning hole for the engagement end to pass through, the inner tube is provided with a plurality of limiting holes, and one of the plurality of limiting holes is engaged with the engagement end when the outer tube is locked with the inner tube.

Optionally, a width of the first positioning hole in a vertical direction is greater than a thickness of the engagement end in the vertical direction, so that when the engagement end is stressed, the engagement end moves vertically in the first positioning hole to realize a vertical movement of the body relative to the outer tube.

Optionally, a lower surface of the engagement end abuts against a lower surface of an inner wall of the first positioning hole when the support leg is in the non-supporting state, and an upper surface of the engagement end abuts against an upper surface of the inner wall of the first positioning hole when the support leg is in the stressed supporting state.

Optionally, the gear member further includes a connecting end, the gear assembly further includes an adjustment button connected to the connecting end, and the adjustment button is hingedly connected to the body; and the adjustment plug further includes a second elastic member, a first end of the second elastic member is connected to the connecting portion, and a second end of the second elastic member abuts against the adjustment button.

Compared with the prior art, in the support leg structure of the present disclosure, the gear assembly and the adjustment plug are arranged between the inner tube and the outer tube to realize the locking of the inner tube with the outer tube and to show the stressed supporting state of the support leg by changing the indication state. The adjustment plug is designed as a structure including the body and the connecting portion that are movably connected to each other, so that the body provided with the state indication portion can move vertically relative to the outer tube. The body moves downward under gravity to show the second indication window. The space allowance between the outer tube and the inner tube allows the inner tube in the stressed supporting state to push the body to move upward synchronously to show the first indication window. In this way, the corresponding indication state can be shown according to the stress status of the support leg, thereby ensuring that whether the support leg is mounted in place can be reliably and effectively indicated, in order to ensure the safety in use. The present disclosure also involves a simple overall structure, a small number of parts, and more convenient installation.

In addition, the present disclosure provides a child safety seat, including the support leg structure as described above.

Compared with the prior art, the child safety seat of the present disclosure has the same advantages as those of the support leg structure compared with the prior art, so the details will not be repeated herein.

### BRIEF DESCRIPTION OF THE DRAWINGS

FIG. 1 is an exploded view of an adjustment plug, a gear assembly, and a protective member according to an embodiment of the present disclosure.
FIG. 2 is an exploded view of an outer tube and an inner tube according to an embodiment of the present disclosure.
FIG. 3 is a cross-sectional view of a support leg structure when a support leg is in a gear position adjustment state according to an embodiment of the present disclosure.
FIG. 4 is an enlarged view of part A in FIG. 3.
FIG. 5 is a cross-sectional view of a support leg structure when a support leg is in a gear position in-place state according to an embodiment of the present disclosure.
FIG. 6 is an enlarged view of part B in FIG. 5.
FIG. 7 is a cross-sectional view of a support leg structure when a support leg is in a gear position in-place state and starts to enter a stressed supporting state according to an embodiment of the present disclosure.
FIG. 8 is an enlarged view of part C in FIG. 7.
FIG. 9 is a structural diagram of a support leg structure when a support leg is in a gear position in-place state and starts to enter a stressed supporting state according to an embodiment of the present disclosure.
FIG. 10 is an enlarged view of part D in FIG. 9.
FIG. 11 is a cross-sectional view of a support leg structure when a support leg is in a gear position and enters a stressed supporting state according to an embodiment of the present disclosure.
FIG. 12 is an enlarged view of part E in FIG. 11.
FIG. 13 is a structural diagram of a support leg structure when a support leg is in a gear position and enters a stressed supporting state according to an embodiment of the present disclosure.
FIG. 14 is an enlarged view of part F in FIG. 13.

### List of reference numerals:

1. inner tube; 11. limiting hole; 2. outer tube; 21. indication window; 22. first positioning hole; 23. second positioning hole; 3. adjustment plug; 31. body; 311. state indication portion; 3111. first indication window; 3112. second indication window; 3113. limiting buckle; 312. through hole; 32. connecting portion; 33. first elastic member; 34. second elastic member; 4. gear assembly; 41. gear member; 411. engagement end; 412. connecting end; 42. adjustment button; 5. protective member; 51. positioning block.

### DETAILED DESCRIPTION OF THE EMBODIMENTS

To make the objectives, technical features, and advantages of the present disclosure more comprehensible, specific embodiments of the present disclosure will be described in detail below with reference to the accompanying drawings.

In the description of the present disclosure, it should be understood that orientation or position relationships indicated by the terms such as "up" and "down" are orientation or position relationships based on the normal use of the product.

The terms "first" and "second" are used herein for descriptive purposes, and are not intended to indicate or imply relative importance or implicitly point out the number of the indicated technical features. Therefore, the feature defined by "first" or "second" may explicitly or implicitly include at least one such feature. In the drawings of the embodiments of the present disclosure, a coordinate system YZ is provided, where the positive direction of the Y axis represents front, the negative direction of the Y axis represents rear, the positive direction of the Z axis represents up, and the negative direction of the Z axis represents down.

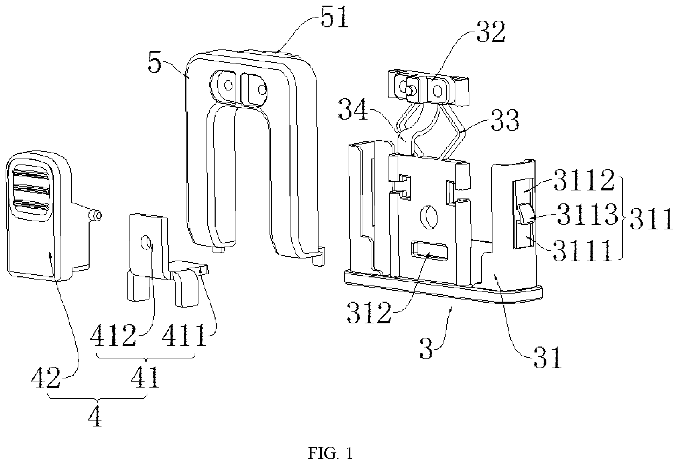

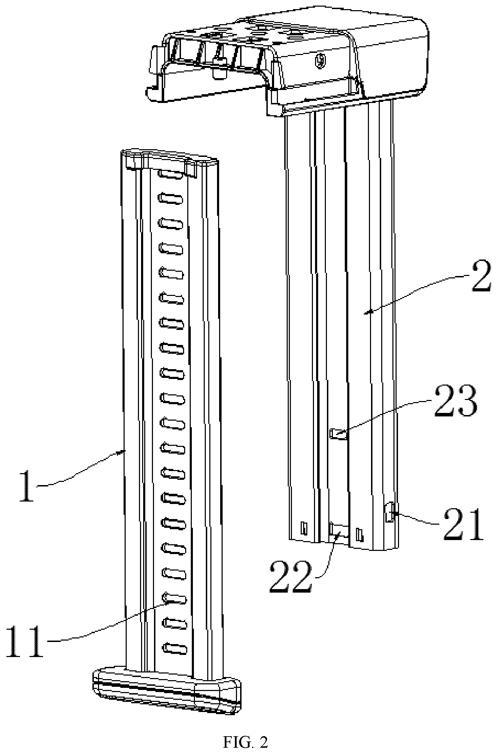

An embodiment of the present disclosure provides a support leg structure. Referring to FIG. 1 and FIG. 2, the support leg structure includes an inner tube 1 and an outer tube 2 vertically slidably connected to each other. A bottom of the inner tube 1 is configured to abut against a chassis of a vehicle. An adjustment plug 3 is mounted between the inner tube 1 and the outer tube 2. The adjustment plug 3 includes a body 31 and a connecting portion 32 arranged above the body 31. The connecting portion 32 is fixedly connected to the outer tube 2. The body 31 is movably connected to the connecting portion 32 to realize a vertical movement of the body 31 relative to the connecting portion 32 when the body 31 is stressed. The body 31 is further movably connected to a gear assembly 4 configured to lock the outer tube 2 with the inner tube 1 or disengage the outer tube 2 from the inner tube 1. A state indication portion 311 is arranged on a side wall of the body 31. The state indication portion 311 includes a first indication window 3111 configured to indicate that a support leg is in a stressed supporting state and a second indication window 3112 configured to indicate that the support leg is in a non-supporting state. The inner tube 1 pushes the body 31 to move upward to show the first indication window 3111 when the outer tube 2 is locked with the inner tube 1 and the support leg is in the stressed supporting state. The body 31 moves downward under gravity to show the second indication window 3112 when the support leg is in the non-supporting state.

The first indication window 3111 and the second indication window 3112 can be used to distinguish indication states by showing different colors. For example, the first indication window 3111 is green and the second indication window 3112 is red. The outer tube 2 is sleeved outside the inner tube 1, and the adjustment plug 3 is sleeved between the inner tube 1 and the outer tube 2. The connecting portion 32 may be fixedly connected to the outer tube 2 by screw connection or engagement. The body 31 may be movably connected to the connecting portion 32 by elastic connection or slidable connection. The body 31 can move vertically relative to the connecting portion 32 when the body 31 is subjected to a force in a vertical direction, i.e., the body 31 is enabled to move vertically relative to the outer tube 2. After the inner tube 1 and the outer tube 2 are locked with each other through the gear assembly 4, there is a space allowance between the inner tube 1 and the outer tube 2 for the inner tube 1 to move vertically relative to the outer tube 2. When the inner tube 1 is subjected to a supporting force from the chassis of the vehicle, the inner tube 1 can move upward relative to the outer tube 2 within this space allowance and drive the body 31 to move upward synchronously, so that the first indication window 3111 is shown through the state indication portion 311. The state indication portion 311 has an elongated structure located in the vertical direction, and the first indication window 3111 is located below the second indication window 3112. The gear assembly 4 is configured to control the length by which the inner tube 1 extends out of the outer tube 2.

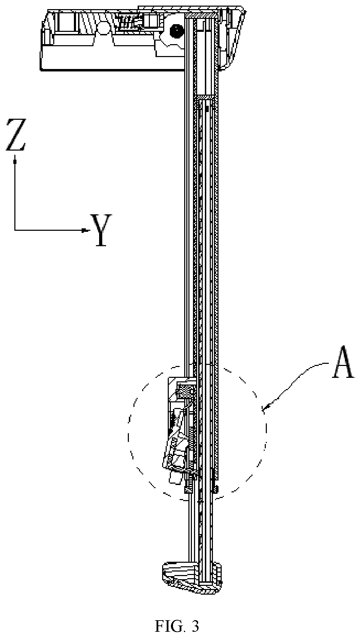

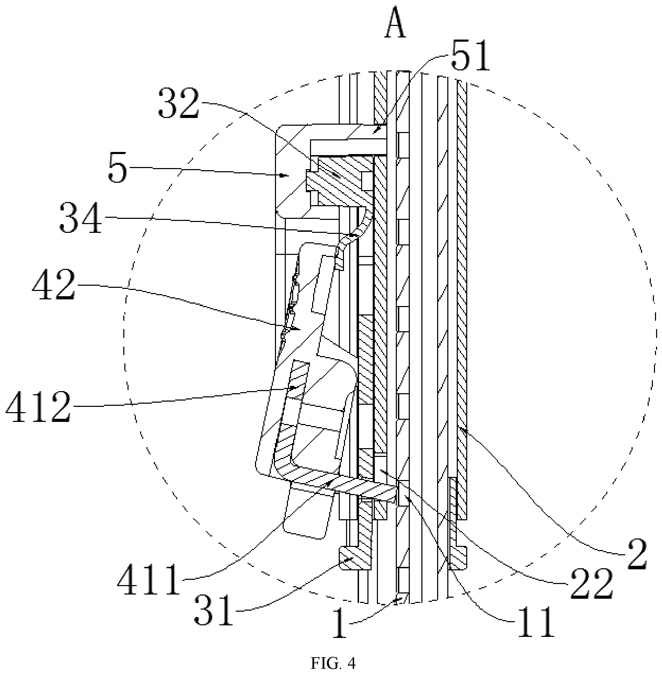

As shown in FIG. 3 and FIG. 4, when the inner tube 1 is disengaged from the outer tube 2, the support leg is in a gear position adjustment state. In this case, the inner tube 1 can move vertically relative to the outer tube 2, and the adjustment plug 3 is not subjected to any external force, i.e., the body 31 of the adjustment plug 3 does not move relative to the outer tube 2. Therefore, the body 31 is kept in a natural drooping state under gravity, so that the second indication window 3112 is shown through the state indication portion 311.

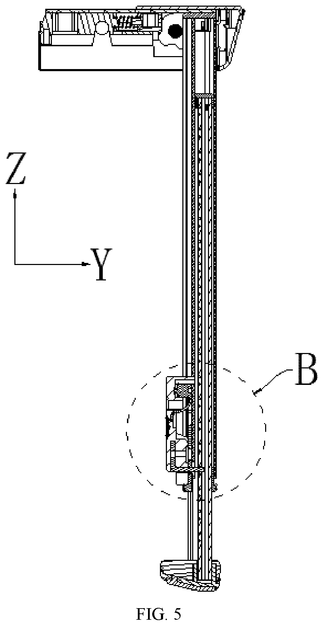

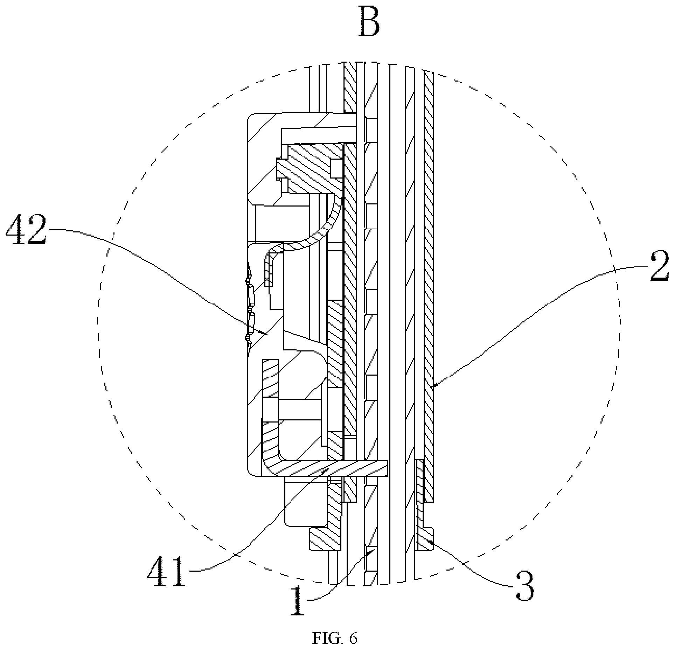

As shown in FIG. 5 and FIG. 6, when the inner tube 1 and the outer tube 2 are locked with each other, the support leg is in a gear position in-place state. In this case, the bottom of the inner tube 1 has not abutted against the chassis of the vehicle yet, i.e., the inner tube 1 is not subjected to an upward supporting force. In this case, the body 31 is not subjected to any external force. Therefore, the body 31 does not move relative to the outer tube 2, and the body 31 is kept in the natural drooping state under gravity, so that the second indication window 3112 is shown through the state indication portion 311.

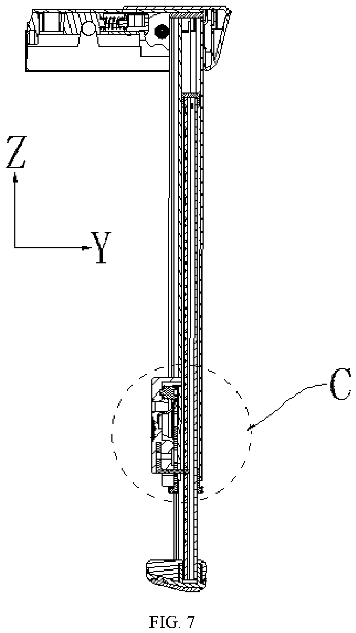

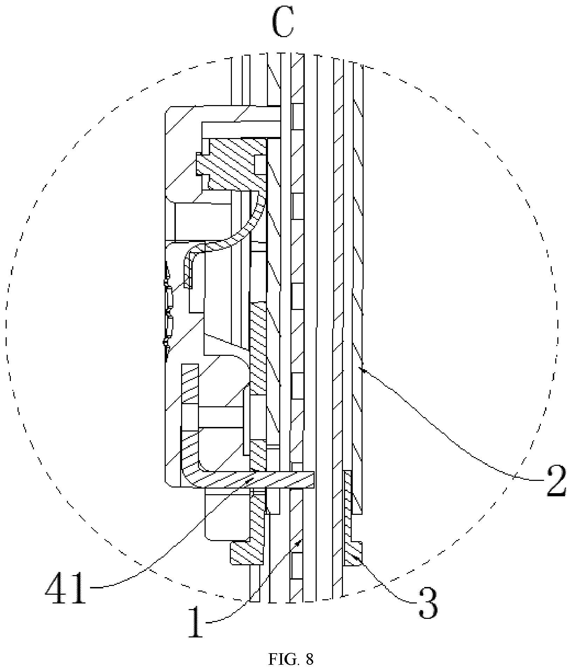

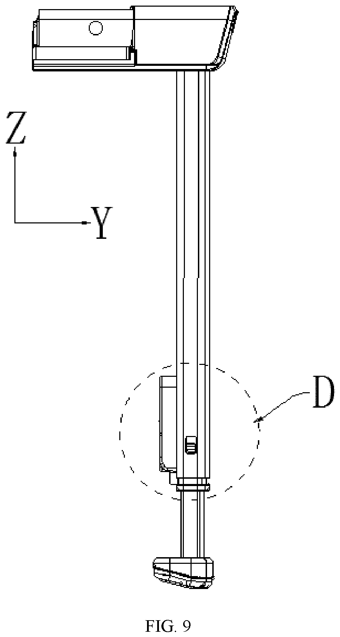

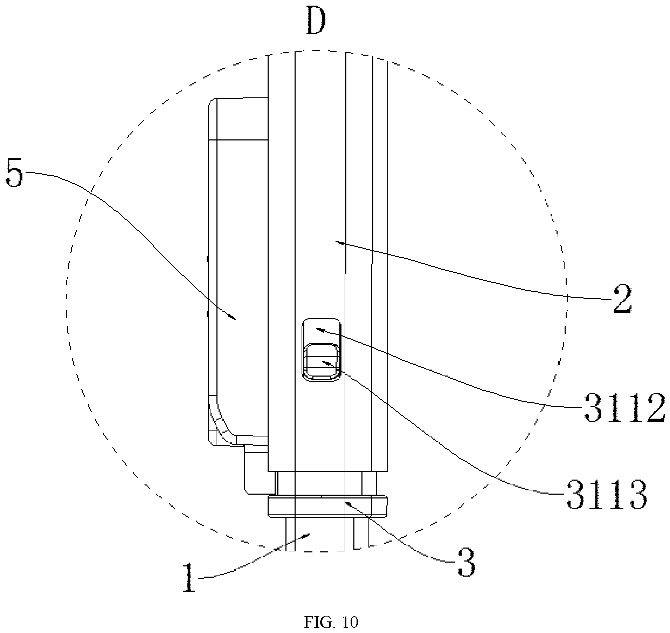

As shown in FIG. 7, FIG. 8, FIG. 9, and FIG. 10, when the inner tube 1 and the outer tube 2 are locked with each other, and the support leg is in the gear position in-place state and starts to enter the stressed supporting state, the bottom of the inner tube 1 starts to abut against the chassis of the vehicle, and the inner tube 1 starts to be subjected to an upward supporting force, but has not pushed the body 31 to move upward, so that the second indication window 3112 is still shown through the state indication portion 311.

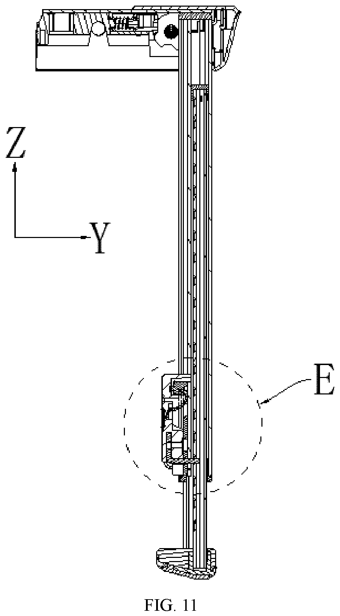

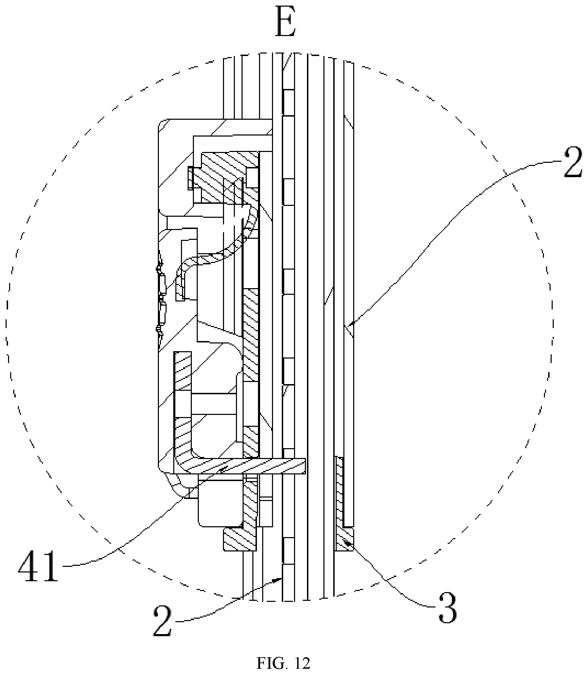

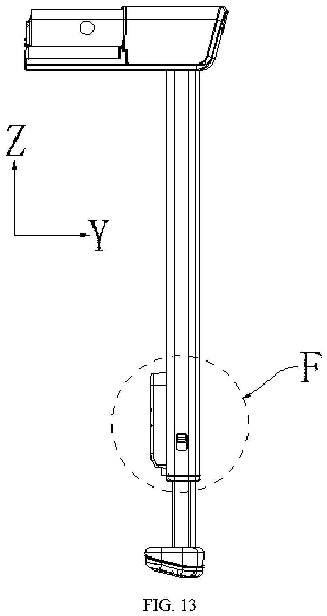

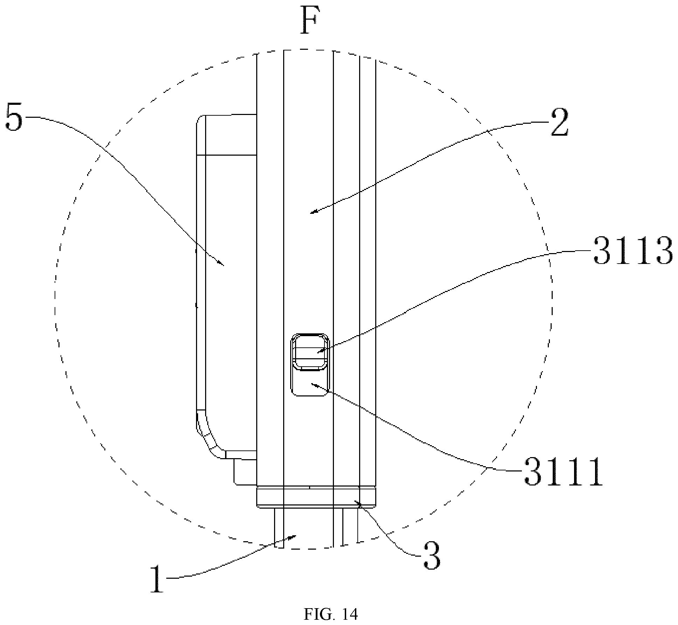

As shown in FIG. 11, FIG. 12, FIG. 13, and FIG. 14, when the inner tube 1 and the outer tube 2 are locked with each other, and the support leg is in a gear position and enters the stressed supporting state, the bottom of the inner tube 1 abuts against the chassis of the vehicle, and the inner tube 1 is subjected to an upward supporting force. The inner tube 1 is forced to move upward within the space allowance between the inner tube 1 and the outer tube 2 and drives the body 31 to move upward, so that the first indication window 3111 is shown through the state indication portion 311.

In the support leg structure of this embodiment, the gear assembly 4 and the adjustment plug 3 are arranged between the inner tube 1 and the outer tube 2 to realize the locking of the inner tube 1 with the outer tube 2 and to show the stressed supporting state of the support leg by changing the indication state. The adjustment plug 3 is designed as a structure including the body 31 and the connecting portion 32 that are movably connected to each other, so that the body 31 provided with the state indication portion 311 can move vertically relative to the outer tube 2. The body 31 moves downward under gravity to show the second indication window 3112. The space allowance between the outer tube 2 and the inner tube 1 allows the inner tube 1 in the stressed supporting state to push the body 31 to move upward synchronously to show the first indication window 3111. In this way, the corresponding indication state can be shown according to the stress status of the support leg, thereby ensuring that whether the support leg is mounted in place can be reliably and effectively indicated, in order to ensure the safety in use. The present disclosure also involves a simple overall structure, a small number of parts, and more convenient installation.

Optionally, as shown in FIG. 1, FIG. 2, FIG. 10, and FIG. 14, the outer tube 2 is provided with an indication window 21 corresponding to the state indication portion 311, and one of the first indication window 3111 and the second indication window 3112 is shown through the indication window 21.

The indication window 21 is an elongated through hole 312. The state indication portion 311 can move vertically relative to the indication window 21. When the support leg is in the non-supporting state, only the second indication window 3112 can be shown through the indication window 21. When the support leg is in the stressed supporting state, only the first indication window 3111 can be shown through the indication window 21. In this embodiment, the arrangement of the indication window 21 to show the corresponding indication state makes the indication more concise and clear.

Optionally, as shown in FIG. 1 and FIG. 2, the state indication portion 311 is provided with a limiting buckle 3113 configured to engage with the indication window 21.

The limiting buckle 3113 is located at a middle position on the state indication portion 311. The limiting buckle 3113 is arranged to protrude from the state indication portion 311. When the first indication window 3111 is shown through the indication window 21, an upper end of the limiting buckle 3113 abuts against the indication window 21. When the second indication window 3112 is shown through the indication window 21, a lower end of the limiting buckle 3113 abuts against the indication window 21. In this embodiment, the arrangement of the limiting buckle 3113 can prevent the adjustment plug 3 from moving too far, to further ensure that only one of the two indication states is shown through the indication window 21 at a time.

Optionally, as shown in FIG. 1, the adjustment plug 3 further includes a first elastic member 33, an upper end and a lower end of the first elastic member 33 are respectively connected to the connecting portion 32 and the body 31, and the body 31 is movably connected to the connecting portion 32 through the first elastic member 33.

The first elastic member 33 is an up-down compression return elastic piece. Two first elastic members 33 are provided. The two first elastic members 33 are symmetrically arranged. Two ends of each of the two first elastic members 33 are respectively connected to the connecting portion 32 and the body 31 to form a rhombic structure. The movement of the body 31 relative to the connecting portion 32 is realized through the deformation of the first elastic members 33, so that the connection between the connecting portion 32 and the body 31 is firmer and the relative movement between the connecting portion 32 and the body 31 is more stable. The connecting portion 32 is of an elongated rectangular structure and is fixedly connected to the first elastic members 33. The first elastic members 33 are fixedly connected to the body 31.

In this embodiment, the first elastic members 33 are arranged between the body 31 and the connecting portion 32, and the relative movement between the body 31 and the connecting portion 32 is realized through the elasticity of the first elastic members 33. Such a movable connection structure is simple and reliable, and can be conveniently installed.

Optionally, as shown in FIG. 1 and FIG. 2, the support leg structure further includes a protective member 5 connected to the connecting portion 32, where the protective member 5 is provided with a positioning block 51, the outer tube 2 is provided with a second positioning hole 23 configured to engage with the positioning block 51, and the connecting portion 32 is fixedly connected to the outer tube 2 through an engagement of the positioning block 51 with the second positioning hole 23.

The connecting portion 32 is fixedly connected to the protective member 5 through a fastener such as a screw. The positioning block 51 is arranged to protrude from a surface of the protective member 5. The second positioning hole 23 is a rectangular hole. The positioning block 51 is fixedly connected to the second positioning hole 23 to ensure that the protective member 5 and the outer tube 2 are fixedly connected to each other. The connecting portion 32 and the protective member 5 are fixedly connected to each other through a screw, and the body 31 can move vertically relative to the protective member 5.

Optionally, as shown in FIG. 1, FIG. 2, FIG. 4, and FIG. 6, the gear assembly 4 includes a gear member 41. The gear member 41 includes an engagement end 411. The body 31 is provided with a through hole 312 for the engagement end 411 to pass through. The outer tube 2 is provided with a first positioning hole 22 for the engagement end 411 to pass through. The inner tube 1 is provided with a plurality of limiting holes 11, and one of the plurality of limiting holes 11 is engaged with the engagement end 411 when the outer tube 2 is locked with the inner tube 1.

After the gear assembly 4 and the protective member 5 are assembled, the engagement end 411 is connected to the through hole 312 and the first positioning hole 22 in sequence. The engagement end 411 can freely move back and forth in the through hole 312 and the first positioning hole 22 when the engagement end 411 is stressed, but will not disengage from the through hole 312 and the first positioning hole 22 during the movement, thereby ensuring that the gear assembly 4, the adjustment plug 3, and the outer tube 2 can be connected to each other. The plurality of limiting holes 11 are evenly arranged on the inner tube 1 at intervals in the vertical direction. To fix the outer tube 2 and the inner tube 1, the engagement end 411 is sequentially passed through the through hole 312, the first positioning hole 22, and the limiting hole 11.

To allow the outer tube 2 to disengage from the inner tube 1, the engagement end 411 is moved backward to disengage from the limiting hole 11. When the engagement end 411 is engaged in the limiting hole 11 and the support leg is in the non-supporting state, an upper surface of the engagement end 411 abuts against an upper surface of an inner wall of the limiting hole 11. When the support leg starts to enter the stressed supporting state, a lower surface of the engagement end 411 abuts against a lower surface of the inner wall of the limiting hole 11.

In this embodiment, the locking of the inner tube 1 with the outer tube 2 and the disengagement of the inner tube 1 from the outer tube 2 are realized through the structural design of the engagement end 411 of the gear assembly 4. Such a structure is simple and reliable, and is convenient to implement.

Optionally, as shown in FIG. 1, FIG. 2, FIG. 4, and FIG. 6, a width of the first positioning hole 22 in a vertical direction is greater than a thickness of the engagement end 411 in the vertical direction, so that when the engagement end 411 is stressed, the engagement end 411 moves vertically in the first positioning hole 22 to realize a vertical movement of the body 31 relative to the outer tube 2.

A difference between the width of the first positioning hole 22 in the vertical direction and the thickness of the engagement end 411 in the vertical direction is the space allowance for the inner tube 1 to move vertically relative to the outer tube 2. After the inner tube 1 and the outer tube 2 are locked with each other through the gear assembly 4, when the inner tube 1 is subjected to a supporting force from the chassis of the vehicle, the inner tube 1 can move upward relative to the outer tube 2 within this space allowance. The inner tube 1 drives the engagement end 411 engaged with the limiting hole 11 to move upward within the space allowance, and the engagement end 411 drives the body 31 to move upward synchronously, so as to change the indication state of the state indication portion 311.

Optionally, as shown in FIG. 1, FIG. 2, FIG. 6, and FIG. 12, a lower surface of the engagement end 411 abuts against a lower surface of an inner wall of the first positioning hole 22 when the support leg is in the non-supporting state, and an upper surface of the engagement end 411 abuts against an upper surface of the inner wall of the first positioning hole 22 when the support leg is in the stressed supporting state.

When the support leg is in the non-supporting state, the body 31 naturally droops under gravity, and the engagement end 411 also is subjected to a downward pressure from the body 31, so that the lower surface of the engagement end 411 abuts against the lower surface of the inner wall of the first positioning hole 22. When the support leg is in the stressed supporting state, the engagement end 411 is pushed upward by the inner tube 1 to move upward, so that the upper surface of the engagement end 411 abuts against the upper surface of the inner wall of the first positioning hole 22. In this embodiment, through the arrangement of the engagement end 411 engaged with the first positioning hole 22, the engagement end 411 and the first positioning hole 22 together with the limiting buckle 3113 provide a dual limiting effect on the fixing of the inner tube 1 and the outer tube 2.

Optionally, as shown in FIG. 1 and FIG. 2, the gear member 41 further includes a connecting end 412. The gear assembly 4 further includes an adjustment button 42 connected to the connecting end 412. The adjustment button 42 is hingedly connected to the body 31. The adjustment plug 3 further includes a second elastic member 34. A first end of the second elastic member 34 is connected to the connecting portion 32, and a second end of the second elastic member 34 abuts against the adjustment button 42.

Protruding columns are arranged on two sides of the adjustment button 42. The body 31 is provided with mounting grooves configured to engage with the protruding columns. The adjustment button 42 is hingedly connected to the body 31 through the engagement of the protruding columns with the mounting grooves. The adjustment button 42 can rotate in a certain angle range relative to the body 31. The adjustment button 42 is fixedly connected to the connecting end 412. The adjustment button 42 can be rotated to drive one end of the gear member 41 to move into or out of the limiting hole 11, so that the inner tube 1 can be locked with the outer tube 2 or disengaged from the outer tube 2 by controlling the adjustment button 42.

The second elastic member 34 is a front-rear compression return elastic piece and is substantially of an S-shaped structure. An upper end of the second elastic member 34 is fixedly connected to the connecting portion 32, and a lower end of the second elastic member 34 protrudes outward and is suspended, and the lower end remains in abutting against the adjustment button 42. When the adjustment button 42 is pressed to disengage the engagement end 411 from the limiting hole 11, the adjustment button 42 presses and compresses the second elastic member 34. When the pressing on the adjustment button 42 is released, the second elastic member 34 pushes the adjustment button 42 to reset, and the adjustment button 42 pushes the engagement end 411 to engage into the limiting hole 11, so that the outer tube 2 and the inner tube 1 are tightly locked with each other.

In this embodiment, the design of the structure in which the second elastic member 34 and the adjustment button 42 cooperate with each other simplifies the operation of controlling the locking of the inner tube 1 with the outer tube 2 and the disengagement of the inner tube 1 from the outer tube 2, and is convenient to implement. In addition, because the second elastic member 34 and the first elastic members 33 are integrated and arranged in the connecting portion 32, not only the functions of the adjustment plug 3 are expanded, but also the overall structure is allowed to be more compact and more convenient to assemble.

Another embodiment of the present disclosure provides a child safety seat, including the support leg structure as described above.

In the child safety seat of this embodiment, the gear assembly 4 and the adjustment plug 3 are arranged between the inner tube 1 and the outer tube 2 to realize the locking of the inner tube 1 with the outer tube 2 and to show the stressed supporting state of the support leg by changing the indication state. The adjustment plug 3 is designed as a structure including the body 31 and the connecting portion 32 that are movably connected to each other, so that the body 31 provided with the state indication portion 311 can move vertically relative to the outer tube 2. The body 31 moves downward under gravity to show the second indication window 3112. The space allowance between the outer tube 2 and the inner tube 1 allows the inner tube 1 in the stressed supporting state to push the body 31 to move upward synchronously to show the first indication window 3111. In this way, the corresponding indication state can be shown according to the stress status of the support leg, thereby ensuring that whether the support leg is mounted in place can be reliably and effectively indicated, in order to ensure the safety in use. The present disclosure also involves a simple overall structure, a small number of parts, and more convenient installation.

Although the present disclosure has been disclosed above, the scope of protection of the present disclosure is not limited thereto. Those skilled in the art can make various changes and modifications without departing from the spirit and scope of the present disclosure. Such changes and modifications also fall within the scope of protection of the present disclosure.

## Claims

1. A support leg structure, comprising an inner tube (1) and an outer tube (2) vertically slidably connected to each other, wherein a bottom of the inner tube (1) is configured to abut against a chassis of a vehicle, an adjustment plug (3) is mounted between the inner tube (1) and the outer tube (2), the adjustment plug (3) comprises a body (31) and a connecting portion (32) arranged above the body (31), the connecting portion (32) is fixedly connected to the outer tube (2), and the body (31) is movably connected to the connecting portion (32) to realize a vertical movement of the body (31) relative to the connecting portion (32) when the body (31) is stressed; and the body (31) is further movably connected to a gear assembly (4) configured to lock the outer tube (2) with the inner tube (1) or disengage the outer tube (2) from the inner tube (1), a state indication portion (311) is arranged on a side wall of the body (31), the state indication portion (311) comprises a first indication window (3111) configured to indicate that a support leg is in a stressed supporting state and a second indication window (3112) configured to indicate that the support leg is in a non-supporting state, the inner tube (1) pushes the body (31) to move upward to show the first indication window (3111) when the outer tube (2) is locked with the inner tube (1) and the support leg is in the stressed supporting state, and the body (31) moves downward under gravity to show the second indication window (3112) when the support leg is in the non-supporting state.

2. The support leg structure according to claim 1, wherein the outer tube (2) is provided with an indication window (21) corresponding to the state indication portion (311), and one of the first indication window (3111) and the second indication window (3112) is shown through the indication window (21).

3. The support leg structure according to claim 2, wherein the state indication portion (311) is provided with a limiting buckle (3113) configured to engage with the indication window (21).

4. The support leg structure according to claim 1, wherein the adjustment plug (3) further comprises a first elastic member (33), an upper end and a lower end of the first elastic member (33) are respectively connected to the connecting portion (32) and the body (31), and the body (31) is movably connected to the connecting portion (32) through the first elastic member (33).

5. The support leg structure according to claim 1, further comprising a protective member (5) connected to the connecting portion (32), wherein the protective member (5) is provided with a positioning block (51), the outer tube (2) is provided with a second positioning hole (23) configured to engage with the positioning block (51), and the connecting portion (32) is fixedly connected to the outer tube (2) through an engagement of the positioning block (51) with the second positioning hole (23).

6. The support leg structure according to any one of claims 1 to 5, wherein the gear assembly (4) comprises a gear member (41), the gear member (41) comprises an engagement end (411), the body (31) is provided with a through hole (312) for the engagement end (411) to pass through, the outer tube (2) is provided with a first positioning hole (22) for the engagement end (411) to pass through, the inner tube (1) is provided with a plurality of limiting holes (11), and one of the plurality of limiting holes (11) is engaged with the engagement end (411) when the outer tube (2) is locked with the inner tube (1).

7. The support leg structure according to claim 6, wherein a width of the first positioning hole (22) in a vertical direction is greater than a thickness of the engagement end (411) in the vertical direction, so that when the engagement end (411) is stressed, the engagement end (411) moves vertically in the first positioning hole (22) to realize a vertical movement of the body (31) relative to the outer tube (2).

8. The support leg structure according to claim 7, wherein a lower surface of the engagement end (411) abuts against a lower surface of an inner wall of the first positioning hole (22) when the support leg is in the non-supporting state, and an upper surface of the engagement end (411) abuts against an upper surface of the inner wall of the first positioning hole (22) when the support leg is in the stressed supporting state.

9. The support leg structure according to claim 6, wherein the gear member (41) further comprises a connecting end (412), the gear assembly (4) further comprises an adjustment button (42) connected to the connecting end (412), and the adjustment button (42) is hingedly connected to the body (31); and the adjustment plug (3) further comprises a second elastic member (34), a first end of the second elastic member (34) is connected to the connecting portion (32), and a second end of the second elastic member (34) abuts against the adjustment button (42).

10. A child safety seat, comprising the support leg structure according to any one of claims 1 to 9.
